# EUROPÄISCHE PATENTSCHRIFT

(11) **EP 1 966 503 B1**
(45) Veröffentlichungstag und Bekanntmachung des Hinweises auf die Patenterteilung: **26.09.2012**
(21) Anmeldenummer: 06830093.8
(22) Anmeldetag: 23.11.2006
(51) Int. Cl.: F16D 23/06

(54) **SCHIEBEMUFFE**
SLIDING SLEEVE
MANCHON COULISSANT

(30) Priorität: 23.12.2005 DE 102005062171
(43) Veröffentlichungstag der Anmeldung: 10.09.2008
(73) Patentinhaber: Schaeffler Technologies AG & Co. KG, 91074 Herzogenaurach (DE)
(72) Erfinder: SCHWUGER, Josef, 91315 Höchstadt (DE); MAY, Kristina, 92237 Sulzbach-Rosenberg (DE)
(86) Internationale Anmeldenummer: PCT/EP2006/068812
(87) Internationale Veröffentlichungsnummer: WO 2007/074000

(56) Entgegenhaltungen:
- WO-A-2004/005740
- DE-A1- 10 053 031
- DE-A1- 10 122 184
- DE-A1- 19 851 799
- DE-U- 1 822 398
- FR-A1- 2 783 027
- FR-A1- 2 811 727
- US-A- 4 315 698

## Beschreibung

### Gebiet der Erfindung

Die Erfindung betrifft eine Schiebemuffe einer Synchronisiereinheit für Schaltgetriebe mit einem Muffenkörper, der an seinem Außenumfang eine Schaltgabelführung mit einer Schaltgabelnut aufnimmt und an seinem Innenumfang eine in Richtung der Längsmittelachse verlaufende Verzahnung aufweist.

### Hintergrund der Erfindung

Derartige Schiebemuffen sind in der Regel als Kupplungselemente in Synchronisiereinrichtungen von Hand geschalteter Kraftfahrzeuggetriebe eingesetzt. Sie verbinden eine Getriebewelle verdrehfest mit einem auf der Getriebewelle drehbar gelagerten Gangrad. Dabei ist die Schiebemuffe konzentrisch zur Getriebewelle angeordnet, verdrehfest und in Längsrichtung der Getriebewelle verschiebbar sowie mit einem Gangrad auf einem Synchronkörper kuppelbar.

Schiebemuffen gibt es in den verschiedensten Ausführungen. Zumeist weisen sie an ihrer Innenmantelfläche eine nach innen weisende Verzahnung auf, die in eine Gegenverzahnung des Synchronkörpers und im geschalteten Zustand in eine Verzahnung des Gangrads eingreift. Am Außenumfang der Schiebemuffe ist eine Schaltgabelführung vorgesehen. Mit der Schaltgabel wird die Schiebemuffe in Längsrichtung auf dem Synchronkörper verschoben, bis sie mit dem Zahnrad verbunden oder wieder zurück in ihrer Neutralstellung bewegt ist.

In der Neutralstellung werden die Schiebemuffen oft axial durch ein Rastelement gehalten, das im Synchronkörper aufgenommen ist und zumeist federbelastet auf eine Ausnehmung wirkt. Die Ausnehmung ist - je nach Ausführung der Rastierung - an einzelnen oder allen nach innen gerichteten Zähnen der Schiebemuffe, den Riegelnutzähnen, ausgebildet. Das Rastelement bewirkt, dass die Schiebemuffe erst nach dem Überwinden eines definierten Widerstandes durch die Bedienperson, beim Schalten des Ganges, axial bewegt werden kann und sich nicht unbeabsichtigt und selbsttätig in axiale Richtung verschiebt. Um verschiedene Rastpunkte z. B. für eine Neutral- und eine Raststellung festzulegen oder Verschiebekräfte und Kraftverläufe unterschiedlicher Höhe zu definieren sind häufig zwei oder mehrere Ausnehmungen in Längsrichtung des Zahns hintereinander angeordnet. Neben oder unabhängig von den vorgenannten Rastelementen wirken bei anderen Synchronisiereinrichtungen Druckstücke oder Sperrelemente auf die Ausnehmungen des nach innen gerichteten Zahns. Die Druckstücke dienen als Betätigungselement für die Vorsynchronisierung. Bei axialem Verschieben der Schiebemuffe werden die Druckstücke durch diese mitgenommen. Dabei leiten sie den Prozess der Synchronisation ein, indem sie auf zwischen dem Gangrad und dem Synchronkörper angeordnete Synchronringe wirken.

Bei einem Gangwechsel wird die Schiebemuffe aus der Neutralstellung oder aus einer zweiten Endstellung in eine erste Endstellung verschoben, wobei die Schiebemuffe über das Druckstück in einem ersten Bewegungsschritt die Ansynchronisation, ein Angleichen der unterschiedlichen Drehzahlen zwischen dem Gangrad und dem Synchronkörper, einleitet. Weil die Schiebemuffe in diesem Prozess Kräfte aufnimmt, ist es erforderlich, dass sie sicher durch die Schaltgabel geführt wird. Diese Schaltgabelführungist beispielsweise dadurch realisiert, dass die Schiebemuffe an ihrem Außenumfang eine umlaufende Schaltgabelnut aufweist, in die eine halbkreisförmig ausgebildete Schaltgabel eingreift.

In der DE 39 08 989 C2 ist vorgeschlagen, dass jeweils ein umlaufender Absatz angeordnet wird. Nach dem Fügen der Symmetriehälften bilden die einander zugewandten Stirnseiten Gegenflächen und die von ihnen eingeschlossenen äußere Mantelfläche des Muffenkörpers eine um den Umfang umlaufende Schaltgabelnut, die als Schaltgabelführung dient und in die eine Schaltgabel des Schaltgetriebes eingreift. Die Gegenflächen sind Anschläge, über die die axiale Verschiebebewegung von der Schaltgabel auf die Schiebemuffe übertragen wird.

In Figur 1 der FR 27 83 027 ist eine weitere Schiebemuffe offenbart, die einteilig ausgebildet ist und zur Schaltgabel gerichtet eine Schaltgabelnut aufweist, zu deren Herstellung an ihren axialen Enden Freistiche vorgesehen sind.

Das Einbringen der Schaltgabelnut durch spanende Bearbeitung ist vergleichsweise aufwändig und kostenintensiv, da die Drehwerkzeuge schnell verschleißen. Insbesondere am Eckenradius tritt ein erhöhter Verschleiß auf. Bei spanlosen Herstellungsverfahren, insbesondere bei spanlos hergestellten Blechschiebemuffen mit freigestellten Dachspitzen der Zähne, besteht der Nachteil, dass separat vom Muffenkörper gefertigte Anschläge nicht von innen nach axial außen stoffschlüssig befestigt werden können.

Eine Schiebemuffe mit einer Blechverzahnung ist beispielsweise in DE 101 22 184 A1 gezeigt, wobei der Muffenkörper außenseitig durch zwei Ringe eingefasst ist. Die Ringe bilden keine plane Anschlagfläche für die Schaltgabel.

Des Weiteren ist bei Synchronisiereinheiten mit Leichtbauschaltgabeln, die beispielsweise aus Aluminium bestehen, und Schiebemuffen nach dem Stand der Technik der Verschleiß erhöht.

### Aufgabe der Erfindung

Der Erfindung liegt deshalb die Aufgabe zugrunde, eine Schiebemuffe zu schaffen, bei der die vorstehend genannten Nachteile beseitigt sind.

### Zusammenfassung der Erfindung

Erfindungsgemäß wird diese Aufgabe nach den Merkmalen des Anspruchs 1 dadurch gelöst, dass die Nuten zumindest teilweise radial zwischen den Ringen und dem Muffenkörper angeordnet sind.

Der Absatz oder die Nut werden im Falle der spanenden Herstellung in die Schaltgabelnut eingebracht, bevor die spanende Feinbearbeitung der Schaltgabelnut erfolgt. Sie ermöglichen es, dass die Schneidkante des Drehwerkzeugs beim Bearbeiten nicht gleichzeitig an Haupt- und Nebenschneidebene anliegt, sondern nur an einer Seite. Die Belastung des Drehwerkzeugs und damit sein Verschleiß sind wesentlich geringer.

Sollte die Herstellung komplett spanlos erfolgen, ermöglicht es der Absatz bzw. die Nut in der Schaltgabelnut, eine Schaltgabelführung, die beispielsweise als ringförmige Scheibe auf dem Muffenkörper angeordnet ist, mit dem Muffenkörper schaltgabelnutseitig oder beidseitig stoffschlüssig zu verbinden. Dies ist insbesondere bei Schiebemuffen mit freigestellten Dachspitzen der Zähne von Bedeutung, weil eine stoffschlüssige Befestigung von separat hergestellten Schaltgabelführungen von axial außen nach innen z.B. durch Schweißen aufgrund Materialmangels nicht möglich ist. Die erfindungsgemäße Nut in der Schaltgabelnut ermöglicht ein Befestigen, das nun von axial innen nach außen erfolgen kann.

Die Verwendung von Blech als Ausgangsmaterial zur Fertigung von Muffenkörpern oder Schiebemuffen erlaubt den Einsatz von einfachen Schnitt- und Formwerkzeugen. Profile wie die erwähnte Innenverzahnung, Ausnehmungen, Nuten, Aussparungen und Dachschrägen an der Verzahnung können in flach ausgerichtete Blechstreifen- oder Platinen durch z. B. Prägen, Rollieren und Walzen eingebracht werden. Im Gegensatz zu einem zylindrisch ausgeformten Muffenkörper nach dem Stand der Technik entstehen dabei keine Hinterschnitte in Entformungsrichtung der Werkzeuge.

Die Ausgangsform des spanlos hergestellten Muffenkörpers liegt dabei in Form eines profilierten Blechstreifens vor. Die Profilierung enthält alle Elemente wie die Innenverzahnung und deren Nuten, Ausnehmungen, Aussparungen und Dachschrägen. Der Blechstreifen kann z. B. von einem endlosen Bandmaterial mit einer Länge, die dem Umfang des Muffenkörpers entspricht, getrennt werden. Die endgültige zylindrische Form des Muffenkörpers wird aus diesem Blechstreifen gebildet, der kreisförmig gebogen, an seinen Schnittkanten zusammengeführt und dort verschweißt ist. Die Schaltgabelführung kann sowohl vor dem Umformen eingebracht werden als auch nachher durch separat hergestellte Bauteile, die mit dem Muffenkörper verbunden werden, aufgebracht werden.

Nach der Erfindung sind zwei Nuten in der Schaltgabelnut ausgebildet, wobei die Nuten an die Schaltgabelführung angrenzen oder teilweise zwischen Schaltgabelführung und Muffenkörper angeordnet sind. Die Schaltgabelführung am Außenumfang des Muffenkörpers ist durch zwei auf dessen Außenumfang angeordneten Ringe, die auch als Scheibe ausgebildet sein können, gebildet. Sowohl der Schaltgabelnutgrund als auch die seitlichen Wände der Schaltgabelführung bildenden Teile der Ringe können erfindungsgemäß jeweils einzeln bearbeitet werden, ohne dass ein Werkzeug an mehreren Seiten im Eingriff stehen muss.

Die Nuten erfüllen eine weitere Funktion, um den Verschleiß einer mit der Schiebemuffe zusammen wirkenden Schaltgabel zu vermindern. Die Schaltgabel erstreckt sich im montierten Zustand der Synchronisiervorrichtung nicht bzw. nicht vollständig in die Nuten. Durch eine derartige Ausbildung ist es einerseits möglich, eine optimierte Auflagefläche, zwischen Schiebemuffe und Schaltgabel zu schaffen, andererseits kann sich Schmiermittel wie Öl in der Nut sammeln und eine Schmierung gewährleisten, wodurch der Verschleiß reduziert ist. Besonders vorteilhaft ist diese Wirkung bei Verwenden von Leichtbauschaltgabeln, die beispielsweise aus Stahlblech oder einem Leichtmetall bestehen.

Eine erfindungsgemäße Schiebemuffe lässt sich besonders einfach herstellen, indem zunächst in einem ersten Schritt in entsprechend abgelängtes Bandmaterial die Nuten, der Absatz oder eine sonstige Außendurchmesseränderung eingebracht werden. Es ist dabei nicht von Bedeutung, ob das Einbringen der Verzahnung gleichzeitig, vorher oder nachher erfolgt. In einem nachfolgenden Schritt wird dann das Band zu einem ringförmigen Körper umgeformt, und die Bandenden werden aneinander dauerhaft fixiert. Optional kann dann eine Endbearbeitung erfolgen.

### Kurze Beschreibung der Zeichnungen

Die Erfindung wird nachstehend anhand eines Ausführungsbeispiels näher erläutert. Die dazugehörigen Zeichnungen zeigen:
- Figur 1: einen Längsschnitt eines Teils einer Synchronisiervorrichtung nach dem Stand der Technik,
- Figur 2: einen Längsschnitt einer erfindungsgemäßen Schiebemuffe,
- Figur 3: eine vergrößerte Darstellung eines Längsschnittausschnitts einer weiteren nicht erfindungsgemäßen Schiebemuffe mit freigestellten Dachspitzen,
- Figur 4: eine vergrößerte Darstellung des mit IV bezeichneten Ausschnitts aus Figur 2,
- Figur 5: eine perspektivisch Schrägansicht eines erfindungsgemäßen Muffenkörpers,
- Figur 6: den Muffenkörper einer Schiebemuffe nach Figur 3 in einer perspektivischen Schrägansicht.

### Ausführliche Beschreibung der Zeichnungen

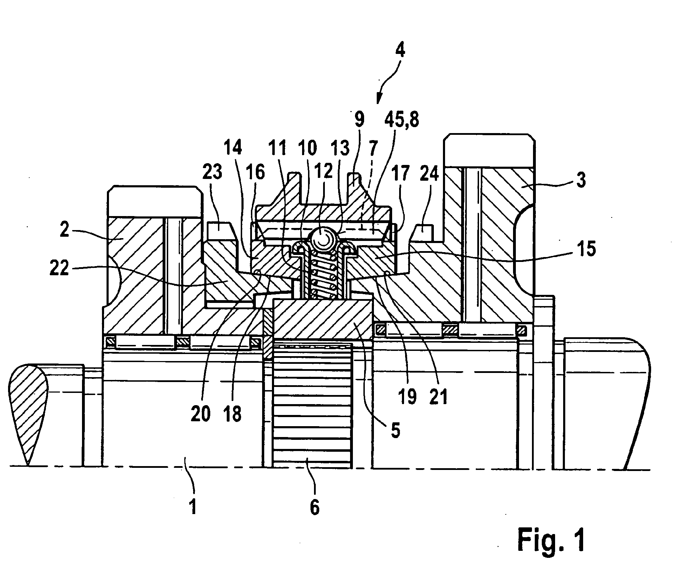

In Figur 1 ist mit 1 eine Welle eines Schaltgetriebes für Kraftfahrzeuge bezeichnet, auf welcher zwei Gangräder 2 und 3 frei drehbar gelagert sind. Zwischen diesen beiden Gangrädern 2 und 3 ist eine Synchronisiereinrichtung 4 angeordnet, über welche wahlweise eines der beiden Gangräder 2 oder 3 an die Welle 1 kuppelbar ist. Auf diese Weise wird das Schaltgetriebe in unterschiedliche Übersetzungsstufen geschaltet.

Die Synchronisiereinrichtung 4 weist einen Synchronkörper 5 auf, der drehfest in eine Verzahnung 6 der Welle eingreift. Weiterhin ist der Synchronkörper 5 an seinem äußeren Umfang mit einer Außenverzahnung 7 versehen, in welche Zähne 8 einer Innenverzahnung 45 einer Schiebemuffe 9 eingreifen. Im Synchronkörper 5 ist weiterhin ein Druckstück 10 mit einer Druckfeder 11 geführt, das ein kugelförmiges, in Längsrichtung über das Druckstück 10 vorstehendes Rastelement 12 aufnimmt. Das kugelförmige Rastelement 12 ragt dabei aus dem Synchronkörper 5 bis etwa zum Kopfkreis der Außenverzahnung 7 vor. In einer Neutralstellung der Synchronisiereinrichtung 4, in keine der beiden möglichen Gangstufen geschaltet ist und sich somit die beiden Gangräder 2 und 3 frei gegenüber der Welle 1 drehen, greift das Rastelement 12 in eine in der Innenverzahnung 45 der Schiebemuffe 9 ausgebildete Riegelnut 13 ein.

Beiderseits des Druckstücks 10 sind Synchronringe 14 und 15 angeordnet, die außen eine Sperrverzahnung 16 und 17 und innen eine Reibfläche 18 und 19 aufweisen. Die Reibflächen 18 und 19 der Synchronringe 14 und 15 wirken zusammen mit entsprechend ausgebildeten Reibflächen 20 und 21, welche am Gangrad 3 sowie einem drehfest mit dem Gangrad verbundenen Kupplungsring 22 ausgebildet sind.

Während eines Schaltvorgangs wird bei einer entsprechenden Sperrsynchronisierung über das Druckstück 10 zunächst während des Ansynchronisierens eine axiale Kraft auf den jeweiligen Synchronring 14 oder 15 ausgeübt, so dass dieser über seine Reibfläche 18 oder 19 von der entsprechenden Reibfläche 20, 21 mitgenommen und gegenüber dem Synchronkörper 5 um einen bestimmten Winkel verdreht wird. In dieser Lage sperrt .die Sperrverzahnung 16 eine weitere Verschiebung der Schiebemuffe 9. Diese Sperrwirkung wird erst dann aufgehoben, wenn ein Gleichlauf zwischen dem jeweiligen Gangrad 2 bzw. 3 und der Welle 1 erzielt ist. In diesem Moment wird die Innenverzahnung 8 der Schiebemuffe 9 durch die Sperrverzahnung 16 bzw. 17 hindurch bewegt und gelangt schließlich in den Eingriff in eine Kupplungsverzahnung 23 bzw. 24.

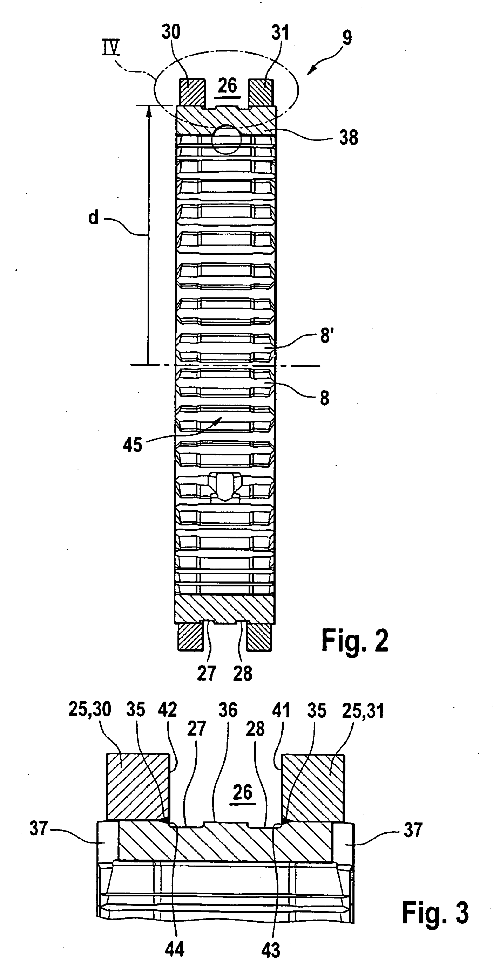

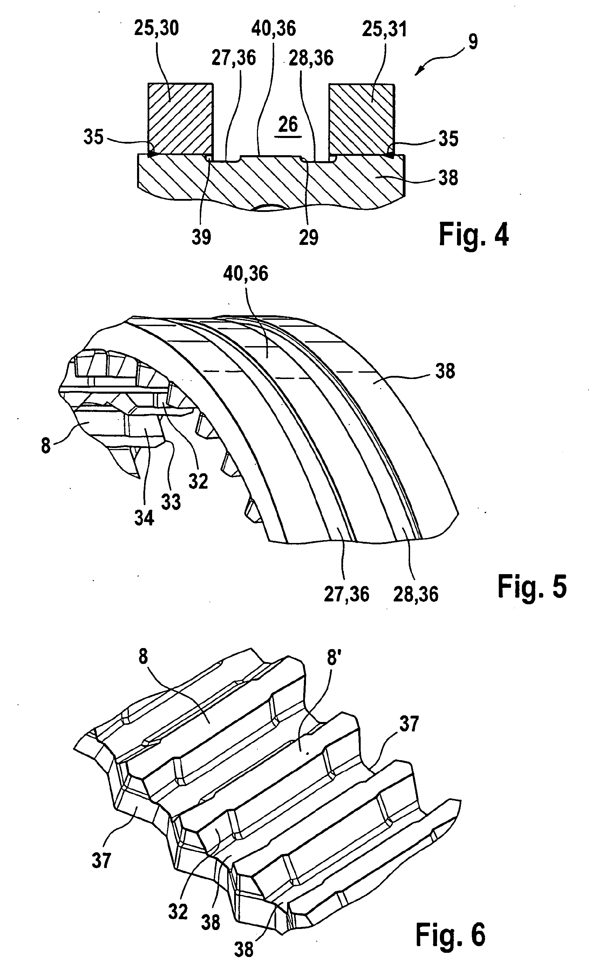

Aus Figur 2 und 4 ist ersichtlich, dass der Innenumfang der Schiebemuffe 9 eine Innenverzahnung 45 aufweist, deren Zähne 8, 8' sich, in ihrem Querschnitt von der Stirnfläche aus gesehen, in Richtung Quermittelebene der Schiebemuffe 9 so verjüngen, dass zentrisch auf der Quermittelebene angeordnete Aussparungen 34 an den Zahnflanken entstehen. Diese Aussparungen 34 an den Zahnflanken stellen sicher, dass die in einem geschalteten Gang ineinander geschobenen Zähne 8, 8' der Schiebemuffe 9 und der Kupplungsverzahnung des Kupplungskörpers oder Zahnrades sich insbesondere bei Lastwechseln nicht voneinander lösen. Weiterhin sind die Enden der Zähne 8, 8' von Schiebemuffen 9 mit Dachschrägen 32 versehen. Die Dachschrägen 32 der Zähne 8, 8' verhindern, dass die Innenverzahnung 45 der Schiebemuffe 9 während der Synchronisation vorzeitig in die Kupplungsverzahnung des Gangrades 2, 3 einrastet. Ist die Synchronisation abgeschlossen, erleichtern die Dachschrägen 32 das Einrasten in die Kupplungsverzahnung.

Die Schiebemuffe 9 nach Figur 2 besitzt einen Muffenkörper 38 und zwei an diesem befestigte Ringe 30, 31. Die Ringe 30, 31 sind mit dem Muffenkörper 38 durch Schweißnähte 35 stoffschlüssig verbunden und bilden die Schaltgabelführung 25. Zusammen mit dem als Schaltgabelnutgrund 36 zwischen ihnen liegenden Außenumfang der Schiebemuffe 9 begrenzen sie die Schaltgabelnut 26. Der Nutgrund 36 weist nicht überall den gleichen Abstand d zur Rotationsachse auf. Zwischen den Ringen ist zumindest ein Absatz 29 bzw. sind Nuten 27, 28 angeordnet. Die Nuten 27, 28 sind umlaufend und ragen bis unter die Ringe 30, 31, so dass eine Kehle 39 entsteht. In den Nuten 27, 28 kann sich im montierten Zustand Öl sammeln, dass zur Schmierung der nicht dargestellten Schaltgabel mit gerade abschließenden Schaltgabelenden dienen kann. Der Muffenkörper 38 ohne verschweißte Ringe 30, 31 ist als Schrägansicht in Figur 5 zu ersehen.

Bei einer spanenden Herstellung einer Schiebemuffe 9 nach Figur 2 bzw. 4 können sowohl die nach zueinander gewandten Seiten der Ringe 30, 31 bearbeitet werden, ohne dass das Bearbeitungswerkzeug im Bereich 40 des Schaltgabelnutgrunds, der im verbauten Zustand mit der Schaltgabel zusammenwirkt, anliegt. Auch der Bereich 40, der im verbauten Zustand mit der Schaltgabel zusammenwirkt, lässt sich bearbeiten, ohne, dass das Werkzeug mit den Ringen 30, 31 in Berührung kommt.

Figur 3 zeigt eine weitere nicht erfindungsgemäße Schiebemuffe 9, bei der die Dachspitzen 33 der Zähne 8, 8' mit Freistellungen 37 freigestellt sind. In Figur 6 ist der Muffenkörper 38 allein dargestellt. In diesem Ausführungsbeispiel erfolgt die stoffschlüssige Verbindung in Form einer Schweißnaht 35 der Ringe 30, 31 mit dem Muffenkörper 38 nicht im Bereich der Freistellungen 37, sondern angrenzend zu den Nuten 27, 28. Die äußeren Enden 43, 44 der Nuten 27, 28 in diesem Ausführungsbeispiel liegen in einer Ebene mit den Innenwänden 41, 42 der Ringe 30, 31.

### Bezugszahlenliste

- 1: Welle
- 2: Gangrad
- 3: Gangrad
- 4: Synchronisiereinheit
- 5: Muffenkörper
- 6: Verzahnung
- 7: Außenverzahnung
- 8, 8': Zähne
- 9: Schiebemuffe
- 10: Druckstück
- 11: Druckfeder
- 12: Rastelement
- 13: Riegelnut
- 14: Synchronring
- 15: Synchronring
- 16: Sperrverzahnung
- 17: Sperrverzahnung
- 18: Reibfläche von 14
- 19: Reibfläche von 15
- 20: Reibfläche
- 21: Reibfläche
- 22: Kupplungsring
- 23: Kupplungsverzahnung
- 24: Kupplungsverzahnung
- 25: Schaltgabelführung
- 26: Schaltgabelnut
- 27: erste Nut
- 28: zweite Nut
- 29: Absatz
- 30: Ring
- 31: Ring
- 32: Dachschräge
- 33: Dachspitze
- 34: Aussparungen
- 35: Schweißnaht
- 36: Schaltgabelnutgrund
- 37: Freistellung
- 38: Muffenkörper
- 39: Kehle
- 40: Bereich
- 41: Innenwand
- 42: Innenwand
- 43: äußeres Ende
- 44: äußeres Ende
- 45: Innenverzahnung

- d: Außendurchmesser

## Patentansprüche

1. Schiebemuffe einer Synchronisiereinheit (4) für Schaltgetriebe mit einem Muffenkörper (38), der an seinem Außenumfang eine Schaltgabelführung (25) mit einer Schaltgabelnut (26) und an seinem Innenumfang eine in Richtung der Längsmittelachse verlaufende Innenverzahnung (45) aufweist, wobei die Schaltgabelführung (25) durch zwei parallel zueinander ausgerichtete Ringe (30, 31) ausgebildet ist, die auf dem Außenumfang des Muffenkörpers (38) fixiert und separat vom Muffenkörper (38) hergestellt sind, wobei in dem Nutgrund (36) der Schaltgabelnut (26) Nuten (27, 28) angeordnet sind, die an die Ringe (30, 31) angrenzen, **dadurch gekennzeichnet, dass** die Nuten (27, 28) zumindest teilweise radial zwischen den Ringen (30, 31) und dem Muffenkörper (38) angeordnet sind.

2. Schiebemuffe nach Anspruch 1, **dadurch gekennzeichnet, dass** der Muffenkörper (38) in seinem Ausgangszustand aus einem zumindest einseitig profilierten Blechstreifen besteht, der kreisförmig gebogen ist und dessen Schnittkanten dabei zusammengeführt und miteinander verschweißt sind.

3. Verfahren zur Herstellung einer Schiebemuffe (9) nach Anspruch 1, **dadurch gekennzeichnet, dass**
- in einem ersten Verfahrensschritt Nuten (27, 28) sowie eine rückseitige Verzahnung (45) in einen Blechstreifen durch Prägen, Rollieren, Walzen oder Profilierten eingebracht werden,
- dass in einem zweiten Verfahrensschritt der Blechstreifen zu einem ringförmigen Muffenkörper (38) umgeformt wird, so dass die Verzahnung eine in Richtung der Längsmittelachse verlaufende Innenverzahnung (45) bildet,
- dass nach dem Umformen an dem Außenumfang des Muffenkörpers (38) eine separat hergestellte Schaltgabelführung (25) so aufgebracht wird, dass sie eine Schaltgabelnut (26) bildet, in deren Nutgrund (36) die Nuten (27, 28) zumindest teilweise angeordnet sind.

4. Verfahren nach Anspruch 3, **dadurch gekennzeichnet, dass** die Schaltgabelführung (25) durch Aufschrumpfen oder Verschweißen zweier parallel zueinander angeordneter Ringe (30, 31) gebildet wird.

5. Verfahren nach Anspruch 4, **dadurch gekennzeichnet, dass** die Ringe (30, 31) in der Schaltgabelnut (26) von innen nach außen verschweißt werden.

6. Verfahren nach Anspruch 5, **dadurch gekennzeichnet, dass** die Innenverzahnung (45) Zähne (8, 8') aufweist, deren Dachspitzen (33) freigestellt werden.

7. Verfahren nach Anspruch 3, **dadurch gekennzeichnet, dass** nach dem zweiten Verfahrensschritt die Enden des Bandes aneinander dauerhaft fixiert werden.

8. Verfahren nach Anspruch 4, **dadurch gekennzeichnet, dass** nach dem Aufbringen der Ringe (30, 31) eine Nachbearbeitung der Schaltgabelnut (26) mit einem Drehwerkzeug erfolgt, das lediglich an der Hauptschneidkante anliegt.

9. Synchronisiereinheit mit einer Schiebemuffe nach Anspruch 1 bis 2 oder mit einer Schiebemuffe, die nach einem der Ansprüche 3-8 hergestellt ist.

## Claims

1. Sliding sleeve of a synchronizing unit (4) for manual transmissions, having a sleeve body (38) which on its outer circumference has a shift fork guide (25) with a shift fork groove (26) and on its inner circumference has an internal toothing (45) which runs in the direction of the longitudinal central axis, wherein the shift fork guide (25) is formed by two rings (30, 31) which are aligned parallel to one another and which are fixed to the outer circumference of the sleeve body (38) and which are produced separately from the sleeve body (38), wherein in the groove base (36) of the shift fork groove (26) there are arranged grooves (27, 28) which adjoin the rings (30, 31), **characterized in that** the grooves (27, 28) are arranged at least partially radially between the rings (30, 31) and the sleeve body (38).

2. Sliding sleeve according to Claim 1, **characterized in that** the sleeve body (38) is composed, in its initial state, of a sheet-metal strip which is profiled at least on one side, which sheet-mental strip is curved into a circular shape and the cut edges of which are in the process brought together and welded to one another.

3. Method for producing a sliding sleeve (9) according to Claim 1, **characterized in that**,
- in a first method step, grooves (27, 28) and a rear-side toothing (45) are formed into a sheet-metal strip by stamping, roller-burnishing, rolling or profiling,
- **in that**, in a second method step, the sheet-metal strip is shaped so as to form an annular sleeve body (38) such that the toothing forms an internal toothing (45) running in the direction of the longitudinal central axis,
- **in that**, after the shaping, a separately produced shift fork guide (25) is attached to the outer circumference of the sleeve body (38) in such a way as to form a shift fork groove (26), in the groove base (36) of which the grooves (27, 28) are at least partially arranged.

4. Method according to Claim 3, **characterized in that** the shift fork guide (25) is formed by shrink-fitting or welding of two rings (30, 31) arranged parallel to one another.

5. Method according to Claim 4, **characterized in that** the rings (30, 31) are welded in the shift fork groove (26) from the inside outwards.

6. Method according to Claim 5, **characterized in that** the internal toothing (45) has teeth (8, 8'), the tips (33) of which have clearances.

7. Method according to Claim 3, **characterized in that**, after the second method step, the ends of the strip are permanently fixed to one another.

8. Method according to Claim 4, **characterized in that**, after the attachment of the rings (30, 31), finish machining of the shift fork groove (26) is performed by means of a rotary tool which abuts only at the main cutting edge.

9. Synchronizing unit having a sliding sleeve according to Claim 1 to 2 or having a sliding sleeve produced according to one of Claims 3-8.

## Revendications

1. Manchon coulissant d'une unité de synchronisation (4) pour boite de vitesses comprenant un corps de manchon (38) qui présente sur sa périphérie extérieure un guide de fourchette de changement de vitesse (25) avec une rainure de fourchette de changement de vitesse (26) et sur sa périphérie intérieure une denture intérieure (45) s'étendant dans la direction de l'axe médian longitudinal, le guide de fourchette de changement de vitesse (25) étant réalisé par deux bagues (30, 31) orientées parallèlement l'une à l'autre, qui sont fixées sur la périphérie extérieure du corps de manchon (38) et qui sont fabriquées séparément du corps de manchon (38), des rainures (27, 28) étant pratiquées dans le fond de rainure (36) de la rainure de la fourchette de changement de vitesse (26), lesquelles sont adjacentes aux bagues (30, 31), **caractérisé en ce que** les rainures (27, 28) sont disposées au moins partiellement radialement entre les bagues (30, 31) et le corps de manchon (38).

2. Manchon coulissant selon la revendication 1, **caractérisé en ce que** le corps de manchon (38) se compose, dans son état de départ, d'une bande de tôle profilée au moins d'un côté, qui est cintrée en forme d'arc et dont les arêtes de coupe sont alors assemblées et soudées ensemble.

3. Procédé de fabrication d'un manchon coulissant (9) selon la revendication 1, **caractérisé en ce que**
- dans une première étape de procédé, des rainures (27, 28) ainsi qu'une denture (45) du côté arrière sont pratiquées dans une bande de tôle par gaufrage, laminage, roulage ou profilage,
- **en ce que** dans une deuxième étape de procédé, la bande de tôle est façonnée pour former un corps de manchon annulaire (38), de sorte que la denture forme une denture intérieure (45) s'étendant dans la direction de l'axe médian longitudinal,
- **en ce qu'**après le façonnage, un guide de fourchette de changement de vitesse (25) fabriqué séparément sur la périphérie extérieure du corps de manchon (38) est appliqué de telle sorte qu'il forme une rainure de fourchette de changement de vitesse (26) dans le fond de rainure (36) de laquelle sont pratiquées au moins partiellement les rainures (27, 28).

4. Procédé selon la revendication 3, **caractérisé en ce que** le guide de fourchette de changement de vitesse (25) est formé par emmanchage par frettage ou par soudage entre des bagues (30, 31) disposées parallèlement l'une à l'autre.

5. Procédé selon la revendication 4, **caractérisé en ce que** les bagues (30, 31) sont soudées dans la rainure de fourchette de changement de vitesse (26) de l'intérieur vers l'extérieur.

6. Procédé selon la revendication 5, **caractérisé en ce que** la denture intérieure (45) présente des dents (8, 8') dont les pointes en forme de toit (33) sont exposées.

7. Procédé selon la revendication 3, **caractérisé en ce qu'**après la deuxième étape de procédé, les extrémités de la bande sont fixées l'une à l'autre de manière durable.

8. Procédé selon la revendication 4, **caractérisé en ce qu'**après l'application des bagues (30, 31), un post-usinage de la rainure de fourchette de changement de vitesse (26) a lieu au moyen d'un outil de tournage, qui s'applique uniquement contre l'arête de coupe principale.

9. Unité de synchronisation comprenant un manchon coulissant selon la revendication 1 ou 2, ou comprenant un manchon coulissant fabriqué selon l'une quelconque des revendications 3 à 8.
